Europäisches Patentamt

European Patent Office

Office européen des brevets

(11) Veröffentlichungsnummer: **0 432 857 A2**

# (12) EUROPÄISCHE PATENTANMELDUNG

(21) Anmeldenummer: 90250259.0

(22) Anmeldetag: **10.10.90**

(51) Int. Cl.5: **B23Q 39/02**

(30) Priorität: 11.10.89 DE 8912243 U

(43) Veröffentlichungstag der Anmeldung:
19.06.91 Patentblatt 91/25

(84) Benannte Vertragsstaaten:
AT BE CH DE DK ES FR GB IT LI NL SE

(71) Anmelder: Otto Häfner GmbH & Co. KG
Jenfelder Strasse 30
W-2000 Hamburg 70(DE)

(72) Erfinder: Klumpp, Maximilian, Dipl.-Ing.
Langenwiesen 26
W-2000 Hamburg 67(DE)
Erfinder: Hageleit, Ralf, Dipl.-Ing.
Auf der Fahlhorst 22
W-2117 Wistedt(DE)

(74) Vertreter: Patentanwälte Wenzel & Kalkoff
Grubes Allee 26 Postfach 730466
W-2000 Hamburg 73(DE)

(54) Kurzhub-Werkzeugmaschine mit einem an einem Maschinengestell verfahrbar gelagerten Bohr- und Frässpindelstock.

(57) Die Erfindung betrifft eine Kurzhub-Werkzeugmaschine mit einem an einem Maschinengestell verfahrbar gelagerten Bohr- und Frässpindelstock, mit einem in einer horizontalen Ebene verfahrbaren, einen Werkstückträger bildenden Schlitten, auf dem mindestens ein Spannstock zum Spannen eines Werkstückes angeordnet ist, mit einer Zentrier-Spanneinrichtung zum lösbaren zentrierenden Spannen des Werkstückes, wobei die Zentrier-Spanneinrichtung ortsfest außerhalb des Schlittens dreh- und/oder schwenkbar am Maschinengestell gelagert ist, und mit einer in die Maschine integrierten verfahrbaren Trenneinrichtung zum Abtrennen des gespannten Werkstückes. Diese Trenneinrichtung kann eine Präzisionssäge oder iene Rotationsscheibensäge umfassen. Mit einer so ausgebildeten Maschine kann neben der Langstückbearbeitung auch eine Massenfertigung kurzer Werkstücke aus Profilmaterial ohne aufwendige Umrüstungen durchgeführt werden.

Fig. 1

## KURZHUB-WERKZEUGMASCHINE MIT EINEM AN EINEM MASCHINENGESTELL VERFAHRBAR GELAGER-TEN BOHR- UND FRÄSSPINDELSTOCK

Die Erfindung betrifft eine Kurzhub-Werkzeugmaschine mit einem azn einem Maschinengestell verfahrbar gelagerten Bohr- und Fräs-Spindelstock, mit einem in der horizontalen, durch X- und Y-Richtung aufgespannten Ebene verfahrbaren, einen Werkstückträger bildenden Schlitten, auf dem mindestens ein Spannstock zum Spannen eines Werkstückes angeordnet ist, und mit einer Zentrier-Spanneinrichtung zum lösbaren zentrierenden Spannen des Werkstückes, wobei die Zentrier-Spanneinrichtung ortsfest außerhalb des Schlittens dreh- und/oder schwenkbar am Maschinengestell gelagert und so angeordnet ist, daß bei im Spannstock eingespanntem Werkstück und bei gleichzeitig geöffneter Zentrier-Spanneinrichtung das Werkstück in X-Richtung entsprechend dem Schlittenhub des Werkstückschlittens in dieser Richtung durch die ZentrierSpanneinrichtung bewegbar ist. Eine bekannte Maschine dieser Art (DE-OS 36 32 319) dient dazu, beliebig lange, die Breitenabmessung der Maschine übertreffende und damit nicht in einer Aufspannung bearbeitbare Werkstücke unter Reduzierung der erforderlichen Maschinen-Anschaffungskosten sowie der Rüstzeiten stufenweise bearbeiten zu können. Es handelt sich also vor allem um Werkstücke mit gegenüber ihrem Durchmesser/ihrer Stärke und Höhe dominierender Längenerstreckung, d.h. insbesondere Wellen oder lange Profilteile. Dabei werden selbst extrem lange Werkstücke stufenweise durch eine vorzugsweise numerische, Rechner-gesteuerte (CNC) Kurzhub-Maschine hindurchbewegt und jeweils in dem Bereich des Spannstockes mittels des insbesondere in vertikaler (Z-)Richtung verfahrbaren Spindelstokkes entsprechend der Hublänge des Schlittens bearbeitet, während die Zentrier-Spanneinrichtung gelöst ist und einen Durchgang für das Werkstück freigibt, so daß dieses relativ zur Z-Achse entsprechend dem Schlittenhub bewegt werden kann. Das Werkstück wird außerhalb der Maschine in üblicher Weise auf Rollenbahnen oder ähnlichen Trag- und Stützelementen abgestützt, ohne daß es erforderlich wäre, eine Maschinenbett entsprechend den Dimensionen des Werkstückes vorzusehen und, wie bei Langbett-Maschinen üblich, das Werkzeug über die gesamte Maschinenlänge zu bewegen und zu führen. Ist die Hublänge des Schlittens erreicht, so wird die außerhalb des Schlittens am Maschinengestell gelagerte Zentrier-Spanneinrichtung gespannt, d.h. das Werkstück darin gehalten, während der oder die Spannstöcke des Werkstück freigeben, so daß der Schlitten zusammen mit dem Spannstock/ den Spannstöcken entlang des Werkstückes bewegt werden kann, um in eine neue Ausgangsposition zu fahren und das von der Zentrier-Spanneinrichtung definiert gelagerte Werkstück in dieser erneut ebenso definiert zu spannen. Darauf können die Zentrier-Spanneinrichtung wieder gelöst und das Werkstück durch sie hindurchgezogen und bearbeitet werden. Dieser Vorgang ist praktisch beliebig oft wiederholbar, wobei sich das Werkstück ständig durch die Spannstöcke und/oder die Zentrier-Spanneinrichtung in definierter Spannlage befindet. So können kontinuierlich entlang der Länge des Werkstücke an dessen Umfang Paßnuten, Querbohrungen, Flächungen, Gewinde etc. spanabhebend angebracht werden. Ein wesentlicher Vorteil besteht darin, daß solche Kurzhub-Werkzeugmaschinen in den Herstellungs- und Betriebskosten erheblich günstiger als Langbett-Maschinen sind, abgesehen von ihrem gegenüber solchen Vorrichtungen erheblich geringeren Platzbedarf. Mit anderen Worten ist es das Hauptziel dieser bekannten Maschine, beliebig lange Werkstücke auf von Platzbedarf und Fabrikationskosten her günstigen Kurzhub-Maschinen mit allen sich dadurch bietenden Vorteilen hinsichtlich der Bearbeitungsmöglichkeiten schnell, genau sowie zuverlässig und damit preiswert bearbeiten zu können.

Der Erfindung liegt die Aufgabe zugrunde, eine solche Maschine universeller verwendbar und insbesondere für einen Einsatz auch für kurze Werkstücke nutzbar zu machen.

Diese Aufgabe wird erfindungsgemäß bei einer Maschine der eingangs beschriebenen Art dadurch gelöst, daß in die Maschine eine verfahrbare Trenneinrichtung, wie z.B. eine Säge, zum Abtrennen des gespannten Werkstückes integriert ist. Damit wird es in Gegensatz zu der bekannten Anordnung, mit anderen Worten völlig abweichend von und geradezu in Umkehr zu deren Hauptziel der Bearbeitung sehr langer Werkstücke, nunmehr möglich, auf einer Maschine gleichen Aufbaus obendrein auch kurze Werkstücke in jeweils einer Einspannung und damit "von der Stange", d.h. solange sie noch mit dem Halbzeug verbunden sind, zu bearbeiten; nach Fertigbearbeitung am Rohling/Stangenmaterial werden diese Werkstücke dann mit hoher Maßhaltigkeit durch die Trenneinrichtung bzw. Säge abgeschnitten. Man kann somit auf dieser Maschine neben der Langstückbearbeitung auch eine Massenfertigung kurzer Werkstücke auf Profilmaterial, beispielsweise für Lüftungs-und Klimageräte, ohne aufwendige Umrüstungen durchführen, so daß insgesamt eine Maschine entsteht, die Bearbeitungsgänge wie Bohren, Gewindeschneiden, Fräsen und ähnliche Vorgänge an beliebig langen Strangenmaterialien mit dem Sägen bzw. Ablängen in kontinuierlichem Ablauf und in einer Maschine vereint. Diese Vorzüge kommen sowohl der Bearbeitungsgenauigkeit als auch der -geschwindigkeit zugute, so daß eine preiswertere Herstellung solcher Werkstücke mit einer reduzierten Belastung an Lohnkosten gewährleistet ist, da alle Vorgänge in die Maschine programmierbar und folglich automatisch durchführbar sind.

Um das Ablängen in der erforderlichen hochgenauen Weise durchführen zu können, kann die Säge vorzugsweise eine Präzisionssäge sein, und zwar bevorzugt eine Kreissäge, die in verkikaler (Z-)Richtung verfahrbar ist, so daß von ober her das Werkstück abgelängt werden kann. Eine solche Schneideinrichtung läßt sich günstig an dem Spindelstock-Ständer, und zwar neben dem normalerweise an letzterem in Z-Richtung verfahrbaren Spindelstock unterbringen, so daß der konstruktive Mehraufwand der Maschine in Grenzen gehalten werden kann und vor allen Dingen kein maßgeblicher zusätzlicher Platzbedarf erforderlich ist. In vorteilhafter Weiterbildung der Erfindung kann die Trenneinrichtung bzw. Säge aber auch in Y-Richtung verfahrbar angeordnet sein, wodurch beispielsweise Platz für eine zweite Werkzeugwechseleinrichtung zusätzlich zu einer normalerweise - in Durchlaufrichtung gesehen - vor dem Spindelstock angeordneten Werkzeugwechseleinrichtung vorgesehen werden kann.

Um den Trennschnitt mitt der erforderlichen Genauigkeit in sicherer Einspannung des Werkstückes führen und etwaige Biege- oder sonstige Verformungskräfte vermeiden zu können, kann in bevorzugter Weiterbildung der Erfindung der Schlitten mindestens zwei Spannstöcke tragen und wenigstens einer der beiden Spannstöcke, vorzugsweise der auf der dem Zentrier-Spannelement abgelegenen Seite, mit einem das Werkstück freigebenden Schlitz ausgebildet sein, in den die Säge eintaucht. Hierdurch wird erreicht, daß das Sägen weitgehend gratfrei erfolgen kann und keine oder zumindest nur minimale Nachbearbeitung erforderlich ist.

Im Normalfall wird das Bearbeiten des Werkstückes durch Verfahren des Schlittens in der X-Richtung erfolgen können. Ein Verfahren des Schlittens in Y-Richtung ist bei Einsatz üblicher Drei- oder Vierbackenfutter für die Zentrier-Spanneinrichtung um geringe Beträge (einiger Millimeter, allenfalls weniger Zentimeter) im Rahmen des Futterfreiganges möglich. In diesem Fall, d.h. bei ausschließlichem Anfall solcher Bearbeitungserfordernisse, können Trenneinrichtung bzw. Säge gemeinsam mit dem Spindelstock an einem gestellfesten Ständer angeordnet sein. Wenn hingegen diese Freigang-Beträge für eine vollstän dige Bearbeitung in Y-Richtung nicht· ausreichen, so kann der Ständer in Y-Richtung verfahrbar sein. Damit kann man in einfacher Weise die durch das Drehkopf-Spannfutter gegebenen Bewegungsgrenzen überwinden, zugleich aber auf die Y-Bewegung des Werkstückschlitten verzichten.

Weitere Vorteile und Realisierungsmöglichkeiten der Erfindung gehen aus der folgenden Beschreibung des in der schematischen Zeichnung dargestellten Ausführungsbeispieles hervor. Es zeigt

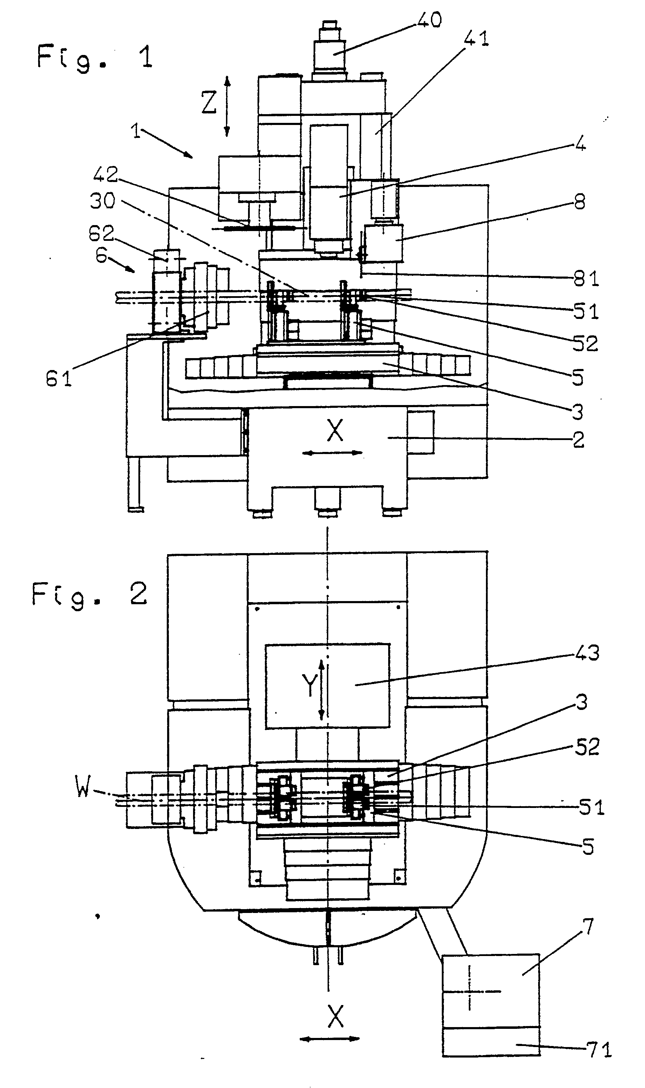

Fig. 1 eine Ansicht einer erfindungsgemäßen Kurzhub-Bohr- und Fräsmaschine und

Fig. 2 eine Draufsicht der Fig. 1.

Die erfindungsgemäße, in den Zeichnungen dargestellte Vorrichtung umfaßt im wesentlichen eine CNC-Kurzhub-Werkzeugmaschine 1, bei der es sich um eine Koordinaten-Bohr- und Fräsmaschine handelt. Auf einem Maschinengestell 2 ist, in geeigneter Weise angetrieben, ein Werkstückschlitten 3 in den X- und Y-Koordinaten verfahrbar gelagert. Weiterhin trägt das Maschinengestell 2 einen Werkzeugständer 43 und an diesem, über Führungen 41 in der Z-Koordinate bewegbar und einen Motor 40 getrieben, einen Spindelstock 4, der der Aufnahme von Bohr-, Fräs-oder ähnlichen Bearbeitungswerkzeugen und dem Antrieb derselben zwecks Bearbeitung eines strichpunktiert angedeuteten Werkstückes 30 dient. Im Bereich des Spindelstockes 4 ist eine Werkzeugwechsel-Einrichtung 42 vorgesehen, die im Falle des Erfordernisses eines Werkzeugwechsels das benötigte neue Werkzeug bereit hält und das Werkzeug, mit dem der vorherige Bearbeitungsgang durchgeführt wurde, aufnimmt, so daß es bei nächster Gelegenheit wieder eingesetzt werden kann. Auf dem Werkstückschlitten 3 sind zwei Spannstöcke 5 in geeigneter, bekannter Weise lösbar festgesetzt, die mit ihren Spannbacken 51 das Werkstück 30 mit einer Achse W auf dem Schlitten spannen. Ortsfest am Maschinengestell 2, also im Abstand zu dem Spindelstock 4 unveränderbar - in X-Richtung gesehen - ist eine Zentrier-Spanneinrichtung 6 angebracht, die hier die Form eines Drehkopf-Spannfutters 61 hat. Zum Antrieb dieser Einrichtung dient einMotor 62. In Werkstückdurchlaufrichtung gesehen ist hinter dem Spindelstock 4 eine ebenso wie jener in vertikaler, also in Z-Richtung verfahrbare Trenneinrichtung 8 in Form einer hochgenau einstellbaren und schneidenden Kreissäge 81 angeordnet. Deren Lagerung am Maschinengestell erfolgt ähnlich wie beim Spindelstock und braucht hier nicht näher erläutert zu werden. Diese Säge 81 kann auch in Y-Richtung, wie weiter unten noch dargelegt, verfahrbar sein, so daß sich dann Platz für eine zweite Werkzeugwechseleinrichtung der oben beschriebenen Art im rechten Maschinenteil ergibt.

Die Steuerung (CNC) der Maschine bzw. ihrer Werkzeuge erfolgt in einer für solche Koordinaten-Maschinen üblichen Weise über einen in Fig. 2 nur angedeuteten Rechner 7 mit Tasten-Eingabefeld für die Steuerbefehle und mit Display 71.

Die Wirkungsweise der erfindungsgemäßen Maschine ist wie folgt:

Ein zu bearbeitender langer Werkstückrohling, beispielsweise ein profiliertes Stangenmaterial oder sonstiges Halbzeug, von dem kurze Werkstücke hergestellt werden sollen, wird von links her durch das geöffnete Drehkopf-Spannfutter 61 in die Maschine eingeschoben und durch die Spannbacken 51 der Spannstöcke 5 in der gewünschten Position festgelegt, d.h. gespannt, so daß sich das freie Ende des Rohlings im Bereich der rechten Spannbacken 51 befindet. Nunmehr kann, soweit erforderlich, zunächst mit Hilfe eines hier nicht näher gezeigten Winkel-Bohr- und Fräskopfes eine Bearbeitung der freien Stirnfläche erfolgen. Sind die Arbeiten mit diesem Werkzeug beendet, so werden nacheinander jeweils gewünschte Bearbeitungen an dem Umfang des Halbzeuges durchgeführt, indem der Winkelkopf ausgetauscht und andere, gewünschte Bearbeitungswerkzeuge in den Spindelstock 4 eingesetzt werden. So können u.a. Flächungen und Paßnuten gefräst, Querbohrungen vorgesehen und Gewinde geschnitten werden.

Um die Bearbeitung an den jeweiligen Stellen vorzunehmen, wird der Schlitten entlang der X-Koordinate verfahren, wobei eine Bearbeitung im Bereich der durch den Schlitten bzw. dessen Bewegbarkeit vorgegebenen Dimensionen möglich ist. Ein Verfahren in der Y-Achse ist entsprechend der Öffnung des Drehkopf-Spannfutters 61, also des Freiganges des Werkstückes in diesem Spannfutter, möglich. Handelt es sich um ein Drei- oder Vierbackenfutter, so wird dieser Freigang in der Y-Achse nur wenige Millimeter bzw. allenfalls Zentimeter betragen, was jedoch normalerweise für die in Betracht kommenden Bearbeitungsvorgänge ausreicht.

Ist dies jedoch nicht der Fall, d.h. reicht dieser geringe Betrag nicht aus und soll insofern eine Verschiebbarkeit in weiteren Grenzen ermöglicht werden, so kann man der Ständer 43 für Spindelstock 4 und Schneideinrichtung 8 auch so ausführen, daß er in Y-Richtung verfahrbar ist (s. Fig. 2), womit eine Y-Bewegung des Tisches bzw. Werkstückschlittens 3 entfallen kann. Damit überwindet man, wie erkennbar, die durch das Drehkopf-Spannfutner 61 gegebenen Bewegungsgrenzen.

Wenn alle in der durch die Spannstöcke 5 bestimmten Winkelstellung im Bereich des Hubes des Schlittens 3 oder des Ständers 43 möglichen Bearbeitungsvorgänge ausgeführt sind und möglicherweise in anderen Winkelstellungen zur Z-Achse weitere Bearbeitungen erfolgen sollen, so werden die Spannbacken 51 der Spannstöcke 5 nach Betätigung des Drehkopf-Spannfutters 61, also Spannen des Werkstückes in diesem Spannfutter, gelöst, woraufhin man über die Koordinatensteuerung 7 mit Hilfe des Drehkopf-Spannfutters eine andere gewünschte Winkellage durch Drehen des Werkstückes 30 um die Achse W erreichen kann.

Ist diese gewünschte Lage eingestellt, so werden die Spannbacken 51 erneut geschlossen, so daß das Werkstück 30 wieder in den Spannstöcken 5 gehalten ist, während das Drehkopf-Spannfutter 61 gelöst wird, damit der Schlitten 3 in X- und/oder Y-Richtung verfahren werden kann. Sobald alle in dem im wesentlichen durch den Abstand zwischen den Spannstöcken 6 bestimmten Längenbereich des Werkstückes 30 beabsichtigten Bearbeitungsvorgänge in der beschriebenen Weise ausgeführt sind, wird das Drehkopf-Spannfutter 61 geschlossen, so daß es das Werkstück 30 hält, woraufhin die Spannstöcke 5 vom Werkstück gelöst werden und der Schlitten 3 in seine äußerste linke Position verfahren wird. In dieser Position werden die Spannbacken 51 geschlossen. Das Drehkopf-Spannfutter 61 wird wieder gelöst, da jetzt das Werkstück über den rechten Spannstock 5 mit dem größten Teil seiner Erstreckung hinausragt und lediglich im Bereich der beabsichtigten Trennfläche noch gehalten zu werden braucht, während der Rohling in der richtigen Position erneut in den Spannstöcken 5 gehalten ist. Der Schlitten 3 wird nach rechts in Richtung der X-Koordinate verfahren, d.h. es wird durch das Drehkopf-Spannfutter 61 hindurch ein neuer Teil des langen Rohlings in den Bearbeitungsbereich des Spindelstockes 4 gezogen. Über die Koordinaten-Steuereinrichtung 7 werden die gewünschte Trennposition für die Trenneinrichtung 8 sowie die Bearbeitungsposition für die anderen Werkzeuge für das nächste Werkstück eingestellt. Die Säge 85 wird nach unten verfahren und trennt das zuvor bearbeitete Werkstück ab, während zugleich der vorgehend beschriebene Bearbeitungsvorgang für das folgende Werkstück beginnen kann. Eine - nicht näher dargestellte - Fördereinrichtung entnimmt das Werkstück nach rechts, und zwar geordnet oder ungeordnet, je nach Bedarfsfall, ggf. zur Weitergabe an eine weitere Bearbeitungsstation. Je nach Länge des Rohlings kann somit eine entsprechende Zahl von Werkstücken geradezu "von der Strange" abgearbeitet werden. Um den Trennvorgang einwandfrei, insbesondere gratfrei ausführen zu können und zu verhindern, daß das bearbeitere und abgetrennte Werkstück frei herunterfallen kann, ist der rechte Spannstock 5 als Doppelspanneinrichtung derart ausgebildet, daß die Säge 81 in einen Schlitz 52 eintauchen und das Werkstück in Einspannung abtrennen kann.

Selbstverständlich ist das Strangenmaterial außerhalb des Drehkopf-Spannfutters 61 und damit außerhalb der Maschine in geeigneter Weise gelagert, wofür Stützrollenbahnen, Lünetten od.dgl. in Betracht kommen.

**Ansprüche**

1. Kurzhub-Werkzeugmaschine mit einem an einem Maschinengestell verfahrbar gelagerten Bohr- und Fräs-Spindelstock, mit einem in der horizontalen, durch X-und Y-Richtung aufgespannten Ebene verfahrbaren, einen Werkstückträger bildenden Schlitten, auf dem mindestens ein Spannstock zum Spannen eines Werkstückes angeordnet ist, und mit einer Zentrier-Spanneinrichtung zum lösbaren zentrierenden Spannen des Werkstückes, wobei die Zentrier-Spanneinrichtung ortsfest außerhalb des Schlittens dreh- und/oder schwenkbar am Maschinengestell gelagert und so angeordnet ist, daß bei im Spannstock eingespanntem Werkstück und bei gleichzeitig geöffneter Zentrier-Spanneinrichtung das Werkstück in X-Richtung entsprechend dem Schlittenhub des Werkstückschlittens in dieser Richtung durch die Zentrier-Spanneinrichtung bewegbar ist, **dadurch gekennzeichnet,** daß in die Maschine (1) eine verfahrbare Trenneinrichtung (8) zum Abtrennen des gespannten Werkstückes integriert ist.

2. Werkzeugmaschine nach Anspruch 1, **dadurch gekennzeichnet,** daß die Trenneinrichtun (8) eine Präzisionssäge (81) umfaßt.

3. Werkzeugmaschine nach Anspruch 1 oder 2 , **dadurch gekennzeichnet,** daß die Trenneinrichtung (8) eine Rotationsscheibensäge (81) ist.

4. Werkzeugmaschine nach einem der Ansprüche 1 bis 3, **dadurch gekennzeichnet,** daß die Trenneinrichtung (8) bzw. Säge (81) in vertikaler (Z)-Richtung verfahrbar angeordnet ist.

5. Werkzeugmaschine nach einem der Ansprüche 1 bis 4, **dadurch gekennzeichnet,** daß die Trenneinrichtung (8) bzw. Säge (81) in Y-Richtung verfahrbar angeordnet ist.

6. Werkzeugmaschine nach einem der Ansprüche 1 bis 5, **dadurch gekennzeichnet,** daß der Schlitten (3) mindestens zwei Spannstöcke (5) trägt und einer der beiden Spannstöcke, vorzugsweise der auf der dem Zentrier-Spannelement (6) ablegenen Stie, mit einem das Werkstück (9) freigebenden Schlitz (52) ausgebildet ist, in den die Säge (81) eintaucht.

7. Werkzeugmaschine nach einem der Ansprüche 1 bis 6, **dadurch gekennzeichnet,** daß die Trenneinrichtung (8) bzw. Säge (81) gemeinsam mit dem Spindelstock (84) an einem gestellfesten Ständer (43) gelagert ist.

8. Werkzeugmaschine nach Anspruch 7, **dadurch gekennzeichnet,** daß der Ständer (43) in Y-Richtung verfahrbar ist.

Fig. 1

Fig. 2